# EUROPEAN PATENT SPECIFICATION

(11) **EP 0 574 698 B1**
(45) Date of publication and mention of the grant of the patent: **19.01.2000**
(21) Application number: 93107608.7
(22) Date of filing: 11.05.1993
(51) Int. Cl.: H04N 5/76, H04N 7/087, H04N 5/782

(54) **Circuit for the reception of television signals with means for analysing characteristics**
Empfängerschaltkreis für Fernsehsignale mit Mitteln für die Analyse von Charakteristiken
Circuit récepteur de signaux de télévision avec des moyens pour analyser des caractéristiques

(30) Priority: 15.05.1992 IT RM920369
(43) Date of publication of application: 22.12.1993
(73) Proprietor: EDICO S.r.l., I-00197 Roma (IT)
(72) Inventor: d'Errico, Federico, Dr., I-00186 Roma (IT)
(74) Representative: Eisenführ, Speiser & Partner

(56) References cited:
- EP-A- 0 158 293
- EP-A- 0 210 609
- EP-A- 0 384 388
- WO-A-91/15083
- US-A- 4 283 735
- US-A- 4 314 285
- US-A- 4 750 052
- US-A- 4 750 053

## Description

The present invention relates to a circuit for the reception of television signals, comprising an assembly of circuits for receiving, detecting and amplifying a colour television signal, also for detecting and amplifying a correlated audio signal, eventually comprising a 'teletext' information decoder and a circuit able to ascertain the presence within the signal received of video synchronism signals.

It is well known what 'teletext' transmissions are; they deal with information, under the form of pages, containing text or graphics, that are inserted in the television signal during the frame return.

It is also known that during television transmissions so-called publicity 'spots' are inserted, and that such inserts are somewhat disturbing, particularly if one wishes to record a transmission (for example a film), as in order to avoid that the inserts are also recorded it is necessary to be present and provide for stopping the recorder in connection with each insert and to restart it when the insert has finished.

Naturally this cannot be carried out in all the numerous cases in which the transmission that one wishes to record is at an hour in which it is not possible to be personally present, or if it takes place simultaneously with another transmission that one wishes to see.

In that case all the inserts are recorded and, if it is then desired to remove them, it is necessary to review the recording and provide to re-record it on another cassette, removing the inserts; this however requires the availability of two separate recorders or of a double deck recorder.

Without doubt it can be affirmed that this fact decreases considerably the convenience of owning a recorder of television programs.

It is also known that the system VPS (Video Programming System) wherein, during the frame return, an identifying label of the ongoing transmission is transmitted, also provides the possibility of signalling whether it concerns a publicity insert; unfortunately such possibility offered by VPS is practically never utilised by broadcasters, due to obvious trade convenience motives.

It is known from European Patent Application n. EP-A-0158 293 a circuit that should automatically detect the publicity inserts; such circuit is substantially based on the detection of 'blank' periods in the video transmission. This system, although relatively simple does not offer any guaranty of correct identification of inserts. It is clear that it is not possible to rely only upon the presence of a period of 'blank' for cancelling a transmission portion.

It is known from US Patent US-A-4, 750, 052 an apparatus for use with a video cassette recorder, intended for eliminating all commercial intervals while recording the program content of a broadcast television signal; the apparatus comprises means for comparing the video signal and the audio signal with respective threshold values to determine when the amplitude of both signals drop below said threshold.

It is also known from US Patent US-A-4, 750, 053 a method for detecting and marking television commercials: a first comparator is used for comparing the television video signal to an adjustable reference voltage and a second comparator compares the television audio signal to a second adjustable reference voltage the output from the two comparators are supplied to a one-shot timer mechanism which generates an output signal of predetermined time period only upon the simultaneous absence of an audio and video signal.

The teachings of the two said patents are substantially the same; such a simple method does not show sufficient ability to identify the publicity inserts so to ensure a reasonable certainty of not eliminating normal program portions.

The present invention has the aim to show how it is possible to realise a circuit for the reception of television signals that offers the possibility of eliminating at least in part the publicity inserts ensuring with reasonable certainty that normal portions of transmission are not eliminated aswell.

For obtaining the illustrated aim, the present invention has for its subject a circuit for the reception of television signals as described in the attached first claim.

Further aims and advantages of the present invention will result in being clear from the detailed description that follows and from the annexed drawings, supplied purely as an explanatory and non-limiting example, wherein:
- figure 1 illustrates a table of some of the characteristics of the television signal in the passage from a normal transmission to a publicity insert;
- figure 2 represents the principle diagram of a receiver according to the invention;
- figure 3 represents the principle diagram of the logic control circuit of a receiver according to the invention.

The problems that arise for realizing a receiver that satisfies the aims that the invention establishes are essentially two.

The first problem to solve is that of identifying the initial and final instants of the insert; such instants are characterised by a transition (from normal transmission to the insert and vice versa); the second problem is that of deciding, once a transition has been identified, whether it concerns the initial or final transition.

In fact during such transitions numerous characteristics of the signal undergo changes.

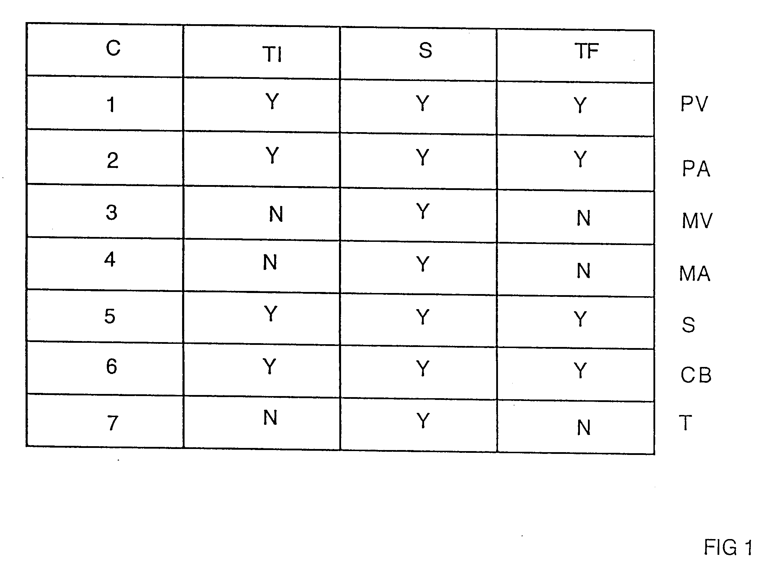

Figure 1 represents a table that illustrates seven characteristics of the television signal observed in practice during the publicity inserts.

The table has 4 columns; the first column, shown with the letter C, represents the characteristics; the second column, shown with letters TI, represents the initial transition, between the normal transmission and the insert; the third column, shown with the letter S, represents the actual publicity insert; the fourth column, shown with the letters TF, represents the final transition, between the insert and the normal transmission. Normally the initial transition (TI) lasts about 2 seconds, and the same is so for the final transition (TF); the insert (S) lasts approximately 3 minutes. In the first column, 1 indicates the video carrier presence; number 2 indicates the audio carrier presence; the number 3 indicates the video modulation presence; number 4 indicates the audio modulation presence; number 5 indicates the presence of video synchronism signals; number 6 indicates the presence of the colour synchronism signal (burst); number 7 indicates the presence of the 'teletext' signal, or more in general, of specific signals in determined lines during the blanking of frame return, in the received television signal.

In the single boxes the letter Y means 'yes' and the letter N means 'no'.

As is seen from the table the two transition phases differentiate from transmission and insert phases due to the absence of video and audio modulations and of the 'teletext' signal.

A survey has shown that also test signals, that should be inserted in lines 17 and 18 of the frame blanking, but that are however in reality inserted in a couple of lines included between the line 17 and the line 21, are not often present during the aforementioned transitions from a normal transmission to a publicity insert and vice versa.

Also the teletext signals are not always present in the same lines; the table that follows provides the situation of several broadcasters, detected in Milan:

| Signals: | Teletext | Test |
|---|---|---|
| RAI | 19-19 | 20-21 |
| RAI | 29-19 | 20-21 |
| RAI 3 | 10-13 | 20-21 |
| TMC | | 17-18 |
| Antenne2 | 16 | 17-18 |
| Canale 5 | | 19-20 |
| Rete mia | | 20-21 |
| Telelombardia | 8-19 | |
| Videomusic | 15-22 | |

As can be seen the situation is practically different for each broadcaster.

However it is possible to identify with reasonable certainty the transitions from normal transmission to publicity insert and from insert to transmission, analysing a sufficiently indicative combination of characteristics, in order that statistically speaking a level of certainty sufficient for the identification is reached; it may result convenient to pre-arrange in the receiver means for memorising combinations being different channel for channel, in order to optimise the probability to carry out a pleasing identification. Such memorisation can easily be carried out in the memory, being present in any television receiver, that serves for memorising, channel for channel, tuning data and, eventually, also other data, such as volume, brightness levels, etc.

A survey has also allowed to establish that, generally, the level of the audio modulation during the publicity inserts is on average superior than that during the normal transmissions; more precisely an average difference of about 6 dB has been detected.

For identifying the initial transition (IT) from the final transition (TF) however an eventual observation of the level of the audio modulation is not particularly useful, first of all as such observation can only be made during the insert and not before it begins, and secondly as it would be however uncertain to take the basis only on a statistical value, not absolutely decisive for a single insert.

Once the transitions from normal transmission to an insert and vice versa has been identified, the other parameter that can be taken into consideration is the duration of the inserts and of the portions of the transmission included between the two inserts. As said the duration of the inserts is on average 3-4 minutes (in Italy); the duration of portions of the transmission included between the two inserts is on average 12 minutes.

Based on these considerations, and observing a transmission for about half an hour before the beginning of the transmission that is of interest to record, it is possible to identify at least three transitions, and from the duration that takes place between them, establish whether the next transition will be an initial or final transition of the insert.

In such a way it is possible to interrupt the recording during the inserts.

Naturally the observation may be carried out by a logic circuit, for example a microprocessor circuit, duly programmed; the same circuit will then provide for controlling the recording.

A practical example will now be described, in which consideration will be taken, regards the combination of chosen characteristics for identifying said transitions from the normal signal to insert and vice versa, of the following:
- presence of video carrier;
- presence of audio carrier;
- presence of video synchronism signals;
- absence of video modulation;
- absence of audio modulation;
- absence of signals during determined lines of the frame return (in the specific case, absence of the 'teletext' signal).

Still with the aims of ensuring with reasonable security of not eliminating normal transmission portions, the last characteristic is to be understood as an absence of signals during determined return lines, signals that were present before the transition; for increasing once again the certainty that the transition shall be considered only if all the signals, first present in the lines, for example from 9 to 21 (and naturally in the corresponding lines of the second half frame), are absent.

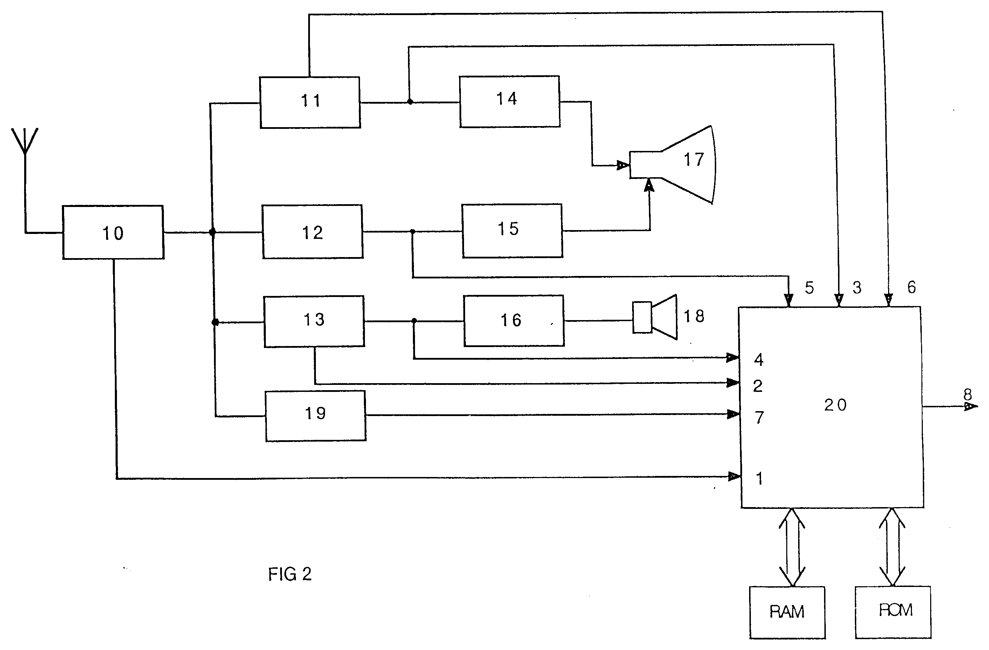

In figure 2 the principle diagram of a receiver according to the invention is illustrated; in the figure reference number 10 indicates the block of the tuning and amplification circuits of the received television signal; reference number 11 indicates the block of the decoding and matrix circuits of the video luminance and brightness signals; reference number 12 indicates the block of the extraction circuits of the video synchronism signals; reference number 13 indicates the block of the audio signal amplification and decoding circuits; reference number 14 indicates the block of the amplification circuits of the colour signals R,G,B; reference number 15 indicates the block of the generation circuits of the deflection signals for the image display device; reference number 16 indicates the block of the amplification circuits of the audio signal; reference number 17 indicates the image display device, for example a colour picture-tube; reference number 18 indicates the sound reproduction device of the audio signals, for example a loudspeaker; reference number 19 indicates the block of extraction and decoding circuits of the 'teletext' signal.

Finally reference number 20 indicates the block of the control circuits, being specific to the receiver according to the invention; the block 20, as previously said, may be for example realised utilising a microprocessor, coupled to a read and write memory (RAM) and to a read only memory (ROM).

In the first the values of the levels during observation and the duration of the various intervals will be gradually memorised; in the second the operative instructions (programs) will be memorised for the actual microprocessor.

Numbers 1 to 7 illustrate the signals coming from circuits 11, 12, 13 and 19 and applied in input to the circuit 20; the numbers are the same as those utilised in the table of Figure 1 and that are repeated here for simplicity:
1 - indicative signal of the presence of video carrier;
2 - indicative signal of the presence of audio carrier;
3 - indicative signal of the video modulation presence;
4 - indicative signal of the audio modulation presence;
5 - indicative signal of the presence of video synchronism signals;
6 - indicative signal of the presence of colour synchronism signal;
7 - indicative signal of the presence of 'teletext' signal.

All such signals are easily obtained with known techniques from relative circuits existing in the receiver.

Number 8 illustrates the signal in output from circuit 20 for the control of the recording; it is typically a yes-no signal. The signal 8 will be applied to the recording device, normally through a suitable actuator (activation of the pause function).

Alternatively the signal 8 could be utilised for other functions, for example for activating the 'mute' function of the audio of the television.

In figure 2 the circuit of a television has been practically represented; it is intended however that a part of the described circuits are not essential for the functioning of the receiver according to the invention, that could, for example, be part of a video recorder rather than of a television.

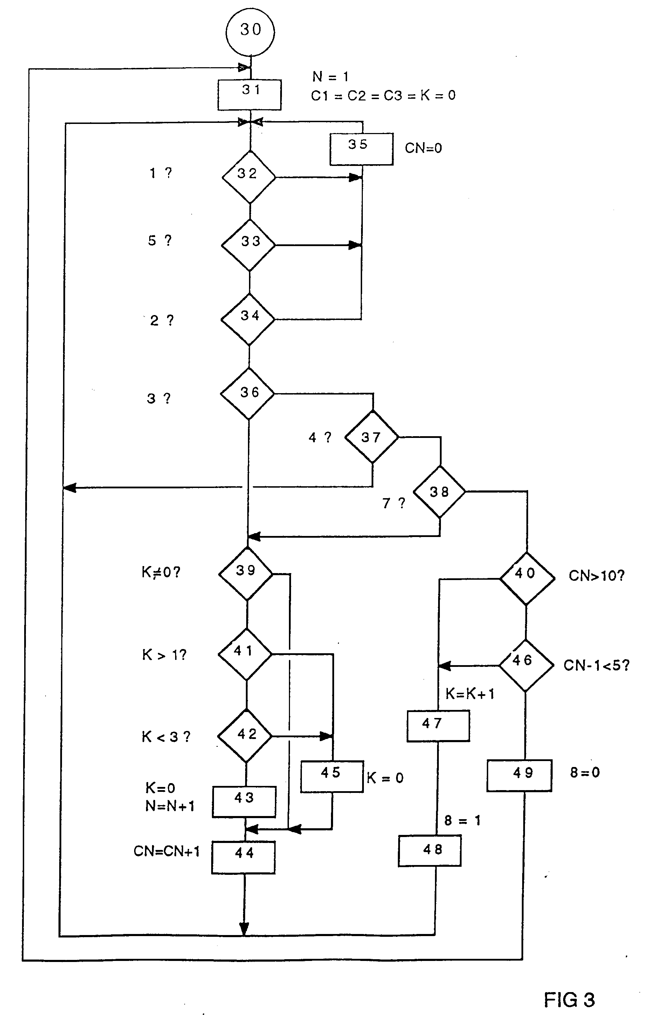

The functioning of the circuit 20 of figure 3 will now be explained making reference to figure 2 in which the principle diagram of the logic control circuit of the receiver according to the invention.

In figure 3, block 30 represents the conventional starting block of the subroutine of analysis and evaluation of the characteristics of the television signal, and of deciding whether to interrupt or not the recording of the television signal. The control passes to block 31.

The block 31 provides to init. the parameters; it zeros 4 counters C(1), C(2), C(3) and K. For explanatory simplicity it may be supposed that the counter K is a second-counter, and counters C1, C2 and C3 are minute-counters. Block 31 also provides to init the index N of the counters to the value of 1, and thus passes the control to block 32.

Block 32 Is a test block, that provides to verify whether the signal n. 1 is present (i.e. whether the video carrier is present); in the affirmative case control passes to block 33; in the negative case control passes to block 35. In the figure in all the test blocks the YES outputs are represented below, the NO outputs are represented on the sides.

Block 33 is a test block, that provides to verify whether the signal n. 5 is present (i.e. whether video synchronism signals are present); in the affirmative case control passes to block 34; in the negative case control passes to block 35.

Block 34 is a test block, that provides to verify whether the signal n. 2 is present (i.e. whether the audio carrier is present); in the affirmative case control passes to block 36; in the negative case control passes to block 35.

Block 35 provides to zero the counter C(N) and then returns the control to block 32.

Block 36 is a test block, that provides to verify whether the signal n. 3 is present (i.e. whether the video modulation is present); in the affirmative case control passes to block 39; in the negative case control pass to block 37.

Block 37 is a test block, that provides to verify whether the signal n. 4 is present (i.e. whether the audio modulation is present); in the affirmative case control returns to block 32; in the negative case control passes to block 38

Block 38 is a test block, that provides to verify whether the signal n. 7 is present (i.e. whether the 'teletext' signal is present); in the affirmative case control passes to block 39; in the negative case control passes to block 40.

Block 39 is a test block, that provides to verify whether the counter K is different from zero; in the affirmative case control passes to block 41; in the negative case control passes to block 44.

Block 40 is a test block, that provides to verify whether the counter C(N) indicates a value greater than 10; in the affirmative case control passes to block 46; in the negative case control passes to block 47.

Block 41 is a test block, that provides to verify whether the counter K indicates a value equal to or greater than 1; in the affirmative case control passes to block 42; in the negative case control passes to block 45.

Block 42 is a test block, that provides to verify whether the counter K indicates a value lower than or equal to 3; in the affirmative case control passes to block 43; in the negative case control passes to block 45.

Block 43 provides to zero the counter K and to increase the index N by one unit; the control then passes to block 44.

Block 44 provides to update the counter C(N); the control then returns to block 32.

Block 45 provides to zero the counter K and the control then passes to block 44.

Block 46 is a test block, that provides to verify whether the counter C(N-1) indicates a value lower than 5; in the affirmative case control passes to block 49; in the negative case control passes to block 47.

Block 47 provides to update the counter K; the control then returns to block 48.

Block 48 provides to assign to the signal 8 the value 1 (enabled recording); the control then returns to block 32.

Block 49 provides to assign to the signal 8 the value 0 (suspended recording); the control then returns to block 31.

The functioning of the described circuit is the following.

If and only if the absence of video and audio modulation and the absence of the 'teletext' signal is detected, and if such absences last from 1 to 3 seconds, it is decided that it concerns a transition; the index N that specifies the counter of the duration elapsed between two transitions is thus changed.

If the last duration is greater than 10 minutes and the second from last was less than 5 it is decided that the next transmission portion is a publicity insert and the registration of such portion is therefore suspended.

In the case of missing synchronisms, or of video carrier, the interruption is not taken into consideration, but considered a transmission abnormality.

Naturally the receiver must be programmed to turn on about half an hour before the beginning of the transmission that is of interests to record, so as it can memorise the duration of at least two transmission portions (being comprised between the three successive transitions) before beginning the recording.

The circuit of Figure 3 does not provide for beginning the recording only after having detected three such transitions; such variation can however be easily provided; the circuit as described is more prudential, for avoiding the loss of the beginning of the transmission; it is obviously preferable to record an insert than lose a piece of the desired transmission.

It can also be provided that the beginning of the recording take place when the label VPS appears, when available, remaining with the recording interruptions based on the principles of the invention.

Also the combination of the characteristics chosen is conservative, as always for the same principle.

The characteristics of the described receiver result in being clear from the given description and from the annexed drawings.

From the given description the advantages of the receiver subject of the present invention are also clear.

In particular they are represented in that it is thus made possible to record automatically without publicity inserts.

In the given example a television has been described; it is obvious that the circuit can be incorporated in another type of receiver of television signals, for instance a video recorder.

It is clear that numerous other variations are possible by the skilled-man to the receiver described by way of example, without departing from the novelty principles inherent in the invention.

For example is possible to provide that the foreseen durations of the transitions (1-3 seconds) and of transmission portions included between them (5-10 minutes) be adjustable.

It is also possible to automate an adjustment of such values, by means of a program that 'learns' from experience the optimal values (it is sufficient to make them record a certain number of durations be it for the interruptions and for transmission portions or inserts and thus adopt as standard values those statistically suitable among all those verified).

It is also advantageous to provide the possibility, as previously mentioned, to memorise, channel for channel, the best combination of characteristics and also the durations shown above.

A possible variation to the described functioning diagram could be that of identifying a period of the first type (insert) and rewind the recorder in order to overtape it; such technique has the advantage of not requiring a 'learning' period of the circuit for the putting in phase of the insert recognition mechanism, but has the disadvantage of requiring a memorisation of the tape position in connection with every transition.

Another variation could consist in the fact of using two recording decks, alternately activated, so as to have the mathematical certainty of not losing a piece of recording for some unforeseen reason that places out of phase the insert recognition system.

## Claims

1. Circuit for the reception of television signals, comprising an assembly of circuits for receiving, detecting and amplifying a colour television signal, for. detecting and amplifying a correlated audio signal, comprising a 'teletext' information decoder and a circuit able to ascertain the presence within the signal received of video synchronism signals, the circuit also including means for analysing a plurality of characteristics of the received signal and for deciding from the combination of said characteristics whether the probability that a publicity insert is about to take place is high or low, characterised by the fact that, if the said combination of characteristics includes at least the following
- video carrier presence,
- audio carrier presence,
- video synchronisms presence
- absence of video modulation,
- absence of audio modulation,
- absence of signals in determined lines during the frame return, then the probability that a publicity insert is about to take place is considered high.

2. Circuit for the reception of television signals, according to the previous claim, characterised in that said means (20; 32, 33, 34, 36, 37, 38) for analysing said combination of characteristics also takes into consideration the time during which said analysed combination of characteristics (1-7) does not change.

3. Circuit for the reception of television signals, according to one or more of the previous claims, characterised in that said means (20) identify periods being of a relatively short duration during which a certain combination of characteristics appears.

4. Circuit for the reception of television signals, according to claim 3, characterised in that said means (20) identifies periods being of a duration relatively greater, included between such short duration periods.

5. Circuit for the reception of television signals, according to claim 3, characterised in that said short duration periods are identified when their duration results in being included approximately between 1 and 3 seconds.

6. Circuit for the reception of television signals, according to claim 4, characterised in that a first and a second type of periods are identified being of a greater duration, the second substantially longer than the first.

7. Circuit for the reception of television signals, according to claim 6, characterised in that said means (20) include logic blocks (Figure 3) for analysing the succession of said periods of first type and of second type, and for deciding whether the period about to begin will be of the first or of the second type.

8. Circuit for the reception of television signals, according to claim 6, characterised in that said first and said second type of periods are identified when their duration is respectively for the first less than 5 minutes and for the second greater than 10 minutes.

9. Circuit for the reception of television signals, according to claim 8, characterised in that when said means (20) detect a period of the first type followed by one of the second type, upon the termination of the latter they send a signal (8) indicative of a publicity insert.

10. Circuit for the reception of television signals, according to claim 3, characterised in that said determined combination of characteristics selected for identifying said periods of relatively short duration is the following:
- video carrier presence;
- audio carrier presence;
- video synchronisms presence;
- absence of video modulation;
- absence of audio modulation;
- absence of test signals during the frame return.

11. Circuit for the reception of television signals, according to claim 3, characterised in that said determined combination of characteristics selected for identifying said periods of relatively short duration is the following:
- video carrier presence;
- audio carrier presence;
- video synchronisms presence;
- absence of video modulation;
- absence of audio modulation;
- absence of 'teletext' signals.

12. Circuit for the reception of television signals, according to claim 3, characterised in that said determined combination of characteristics selected for identifying said periods of relatively short duration is the following:
- video carrier presence;
- audio carrier presence;
- video synchronisms presence;
- absence of video modulation;
- absence of audio modulation;
- absence of signals, normally present, during lines 8-22.

13. Circuit for the reception of television signals, according to claim 3, characterised in that said means (20) are provided for recording a certain number of durations of said periods of short duration and thus adopt as selected values for the identification those statistically significant from among those verified.

14. Circuit for the reception of television signals, according to claim 6, characterised in that said means (20) are provided for recording a certain number of durations of said periods of greater duration and thus adopt as selected values for their identification be it for said first or for said second type of periods those statistically significant from among those verified.

15. Circuit for the reception of television signals, according to one or more of the previous claims, characterised in that it is a part of a television.

16. Circuit for the reception of television signals, according to one or more of the previous claims, characterised in that it is a part of a video recorder.

17. Circuit for the reception of television signals, according to claim 3, characterised in that the duration selected for the identification of said periods of short duration is adjustable.

18. Circuit for the reception of television signals, according to claim 6, characterised in that the duration selected for the identification of said first and said second type periods are adjustable.

19. Circuit for the reception of television signals, according to claim 6, characterised in that means are provided for memorising channel for channel different combinations of characteristics, and/or durations of said periods of short duration and of said first and second type periods, in order to optimise the probability of carrying out a good identification.

20. Circuit for the reception of television signals, according to one or more of the previous claims, characterised in that the use of two recording decks is provided, alternately activated, so as to have the certainty of not losing a piece of recording due to some unforeseen reason that out-phases the insert recognition system.

21. Circuit for the reception of television signals, according to claim 8, characterised in that said means (20) provide for the memorisation of the position of the tape of the recording in connection with each period of short duration and, when they detect a period of the first type, upon termination of the latter a signal (8) indicative of rewinding of the tape to the last memorised position is sent.

22. Circuit for the reception of television signals, according to claim 19, characterised in that said means for memorising combinations and/or durations different channel for channel are coupled to means already provided in the receiver for memorising, channel for channel, tuning data and/or other data relative to the levels of control.

## Patentansprüche

1. Schaltung für den Empfang von Fernsehsignalen, mit einer Anordnung von Schaltungen zum Empfangen, Erfassen und Verstärken eines Farbfernsehsignals, zum Erfassen und Verstärken eines zugehörigen Audiosignales, mit einem "Teletext"-Informationsdekodierer und einer Schaltung, die in der Lage ist, das Vorhandensein von Videosynchronisationssignalen innerhalb des empfangenen Signales zu bestimmen, wobei die Schaltung ebenfalls eine Einrichtung zum Untersuchen einer Mehrzahl von Merkmalen des empfangenen Signals und zum Festlegen aus der Kombination der Merkmale beinhaltet, ob die Wahrscheinlichkeit, dass eine Werbeeinblendung stattfindet, hoch oder niedrig ist, dadurch gekennzeichnet, dass, wenn die Kombination von Merkmalen wenigstens die folgenden beinhaltet:
- Videoträger-Präsenz;
- Audioträger-Präsenz;
- Video-Synchronisations-Präsenz;
- Fehlen von Videomodulation;
- Fehlen von Audiomodulation;
- Fehlen von Signalen in bestimmten Zeilen während des Bildrücklaufes, dann wird die Wahrscheinlichkeit, dass eine Werbeeinblendung stattfindet, als hoch betrachtet.

2. Schaltung für den Empfang von Fernsehsignalen gemäß dem vorstehenden Anspruch,
dadurch gekennzeichnet, dass die Einrichtung (20; 32, 33, 34, 36, 37, 38) zum Untersuchen der Kombination von Merkmalen ebenfalls die Zeit berücksichtigt, während welcher sich die untersuchte Kombination von Merkmalen (1-7) nicht ändert.

3. Schaltung für den Empfang von Fernsehsignalen nach einem oder mehreren der vorstehenden Ansprüche,
dadurch gekennzeichnet, dass die Einrichtung (20) Zeitabschnitte mit einer relativ kurzen Dauer identifiziert, während welcher bestimmte Kombinationen von Merkmalen auftreten.

4. Schaltung für den Empfang von Fernsehsignalen nach Anspruch 3,
dadurch gekennzeichnet, dass die Einrichtung (20) Zeitabschnitte identifiziert, welche eine relativ längere Dauer aufweisen, die zwischen diesen Abschnitten mit kurzer Dauer enthalten sind.

5. Schaltung für den Empfang von Fernsehsignalen nach Anspruch 3, dadurch gekennzeichnet, dass die Zeitabschnitte mit kurzer Dauer identifiziert werden, wenn die Ergebnisse ihrer Dauer etwa zwischen 1 und 3 Sekunden enthalten sind.

6. Schaltung für den Empfang von Fernsehsignalen nach Anspruch 4,
dadurch gekennzeichnet, dass eine erste und zweite Art von Zeitabschnitten größerer Dauer identifiziert werden, wobei die zweite wesentlich länger als die erste ist.

7. Schaltung für den Empfang von Fernsehsignalen nach Anspruch 6,
dadurch gekennzeichnet, dass die Einrichtung (20) logische Blöcke (Fig. 3) zum Untersuchen der Aufeinanderfolge der Zeitabschnitte des ersten Typs und des zweiten Typs beinhaltet, und zum Entscheiden, ob der Zeitabschnitt am Anfang vom ersten oder vom zweiten Typ ist.

8. Schaltung für den Empfang von Fernsehsignalen nach Anspruch 6,
dadurch gekennzeichnet, dass der erste und der zweite Typ von Zeitabschnitten identifiziert werden, wenn deren Dauer für den ersten weniger als fünf Minuten und für den zweiten mehr als zehn Minuten beträgt.

9. Schaltung für den Empfang von Fernsehsignalen nach Anspruch 8,
dadurch gekennzeichnet, dass, wenn die Einrichtung (20) einen Zeitabschnitt des ersten Typs erfasst, gefolgt von einem des zweiten Typs, sie bis zur Beendigung des letzteren ein Signal (8) sendet, welches eine Werbeeinblendung anzeigt.

10. Schaltung für den Empfang von Fernsehsignalen nach Anspruch 3,
dadurch gekennzeichnet, dass die bestimmte Kombination von ausgewählten Merkmalen zum Identifizieren der Perioden relativ kurzer Dauer die folgende ist:
- Videoträger-Präsenz;
- Audioträger-Präsenz;
- Video-Synchronisierungs-Präsenz;
- Fehlen von Videomodulation;
- Fehlen von Audiomodulation;
- Fehlen von Prüfsignalen während des Bildrücklaufes.

11. Schaltung für den Empfang von Fernsehsignalen nach Anspruch 3,
dadurch gekennzeichnet, dass die bestimmte Kombination von ausgewählten Merkmalen zum Identifizieren der Zeitabschnitte relativ kurzer Dauer die folgende ist:
- Videoträger-Präsenz;
- Audioträger-Präsenz;
- Video-Synchronisierungs-Präsenz;
- Fehlen von Videomodulation;
- Fehlen von Audiomodulation;
- Fehlen von "Teletext"-Signalen.

12. Schaltung für den Empfang von Fernsehsignalen nach Anspruch 3,
dadurch gekennzeichnet, dass die bestimmte Kombination von ausgewählten Merkmalen zum Identifizieren der Zeitabschnitte relativ kurzer Dauer die folgende ist:
- Videoträger-Präsenz;
- Audioträger-Präsenz;
- Video-Synchronisierungs-Präsenz;
- Fehlen von Videomodulation;
- Fehlen von Audiomodulation;
- Fehlen von Signalen, die normalerweise während der Zeilen 8-22 vorhanden sind.

13. Schaltung für den Empfang von Fernsehsignalen nach Anspruch 3,
dadurch gekennzeichnet, dass die Einrichtung (20) vorgesehen ist zum Aufzeichnen einer bestimmten Anzahl von Dauern der Zeitabschnitte kurzer Dauer und somit als ausgewählte Werte für die Identifizierung dieser statistisch signifikanten aus den verifizierten annimmt.

14. Schaltung für den Empfang von Fernsehsignalen nach Anspruch 6,
dadurch gekennzeichnet, dass die Einrichtung (20) vorgesehen ist zum Aufzeichnen einer bestimmten Anzahl von Dauern der Perioden größerer Dauer, und somit als ausgewählte Werte für die Identifizierung annimmt, sei es für den ersten oder für den zweiten Typ von Zeitabschnitten dieser statistisch signifikanten aus den verifizierten.

15. Schaltung für den Empfang von Fernsehsignalen nach einem oder mehreren der vorstehenden Ansprüche,
dadurch gekennzeichnet, dass sie Teil eines Fernsehgerätes ist.

16. Schaltung für den Empfang von Fernsehsignalen nach einem oder mehreren der vorstehenden Ansprüche,
dadurch gekennzeichnet, dass sie Teil eines Videorekorders ist.

17. Schaltung für den Empfang von Fernsehsignalen nach Anspruch 3,
dadurch gekennzeichnet, dass die für die Identifizierung der Zeitabschnitte kurzer Dauer ausgewählte Dauer anpassbar ist.

18. Schaltung für den Empfang von Fernsehsignalen nach Anspruch 6,
dadurch gekennzeichnet, dass die zur Identifizierung der Perioden des ersten und zweiten Typs ausgewählte Dauer anpassbar ist.

19. Schaltung für den Empfang von Fernsehsignalen nach Anspruch 6,
dadurch gekennzeichnet, dass eine Einrichtung vorgesehen ist zum kanalweisen Speichern verschiedener Kombinationen von Merkmalen und/oder Dauern der Perioden kurzer Dauer und der Perioden des ersten und zweiten Typs, um die Wahrscheinlichkeit einer Ausführung einer guten Identifizierung zu optimieren.

20. Schaltung für den Empfang von Fernsehsignalen nach einem oder mehreren der vorstehenden Ansprüche,
dadurch gekennzeichnet, dass die Verwendung von zwei Aufzeichnungs-Laufwerken vorgesehen ist, welche alternierend aktiviert werden, um die Sicherheit zu haben, nicht einen Teil der Aufzeichnung infolge eines unvorhergesehenen Grundes zu verlieren, der das Einblendungs-Erkennungssystem aus der Phase bringt.

21. Schaltung für den Empfang von Fernsehsignalen nach Anspruch 8,
dadurch gekennzeichnet, dass die Einrichtung (20) die Speicherung der Position des Bandes der Aufzeichnung in Verbindung mit jeder Periode kurzer Dauer vorsieht, und, wenn sie eine Periode des ersten Typs erfasst, mit der Beendigung der letzteren ein Signal (8), welches das Zurückspulen des Bandes zu der zuletzt gespeicherten Position angibt, gesendet wird.

22. Schaltung für den Empfang von Fernsehsignalen nach Anspruch 19,
dadurch gekennzeichnet, dass die Einrichtung zum Speichern von Kombinationen und/oder Dauern, die sich von Kanal zu Kanal unterscheiden, an eine Einrichtung gekoppelt ist, welche bereits in dem Empfänger vorgesehen ist zum kanalweisen Speichern von Abstimmdaten und/oder anderen zu den Steuerungspegeln gehörenden Daten.

## Revendications

1. Circuit pour la réception de signaux de télévision, comprenant un ensemble de circuits destinés à recevoir, détecter et amplifier un signal de télévision couleur, destinés à détecter et amplifier un signal audio correspondant, comprenant un décodeur d'informations 〈〈 télétexte 〉〉 et un circuit capable de vérifier la présence au sein du signal reçu de signaux de synchronisation vidéo, le circuit comprenant également des moyens destinés à analyser une pluralité de caractéristiques du signal reçu et à déterminer, à partir de la combinaison desdites caractéristiques, si la probabilité selon laquelle une page de publicité est sur le point d'avoir lieu est importante ou non, caractérisé en ce que, si ladite combinaison de caractéristiques inclut au moins l'un des éléments suivants
- présence d'une porteuse vidéo,
- présence d'une porteuse audio,
- présence de synchronisation vidéo,
- absence de modulation vidéo,
- absence de modulation audio,
- absence de signaux sur des lignes déterminées durant la trame de retour,
alors la probabilité selon laquelle une page de publicité est sur le point d'avoir lieu est considérée comme importante.

2. Circuit pour la réception de signaux de télévision, selon la revendication précédente, caractérisé en ce que lesdits moyens (20 ; 32, 33, 34, 36, 37, 38,) destinés à analyser ladite combinaison de caractéristiques prennent également en considération le temps durant lequel ladite combinaison analysée de caractéristiques (1 à 7) ne change pas.

3. Circuit pour la réception de signaux de télévision, selon une ou plusieurs des revendications précédentes, caractérisé en ce que lesdits moyens (20) identifient des périodes étant de relativement courte durée, durant lesquelles une certaine combinaison de caractéristiques apparaît.

4. Circuit pour la réception de signaux de télévision, selon la revendication 3, caractérisé en ce que lesdits moyens (20) identifient des périodes dont la durée est relativement plus longue et comprise entre ces périodes de durée courte.

5. Circuit pour la réception de signaux de télévision, selon la revendication 3, caractérisé en ce que lesdites périodes de courte durée sont identifiées lorsque leur durée s'avère être comprise approximativement entre 1 et 3 secondes.

6. Circuit pour la réception de signaux de télévision, selon la revendication 4, caractérisé en ce qu'un premier et un deuxième types de périodes sont identifiés comme étant d'une plus longue durée, le deuxième étant sensiblement plus long que le premier.

7. Circuit pour la réception de signaux de télévision, selon la revendication 6, caractérisé en ce que lesdits moyens (20) comprennent des blocs logiques (figure 3) destinés à analyser la succession desdites périodes de premier type et de deuxième type, et à déterminer si la période qui est sur le point de débuter sera du premier type ou du deuxième type.

8. Circuit pour la réception de signaux de télévision, selon la revendication 6, caractérisé en ce que ledit premier et ledit deuxième type de périodes sont identifiés lorsque leur durée est respectivement inférieure à 5 minutes pour le premier et supérieure à 10 minutes pour le deuxième.

9. Circuit pour la réception de signaux de télévision, selon la revendication 8, caractérisé en ce que, lorsque lesdits moyens (20) détectent une période du premier type suivie par une période du deuxième type, au moment où cette dernière se termine, ils envoient un signal (8) indicateur d'une page de publicité.

10. Circuit pour la réception de signaux de télévision, selon la revendication 3, caractérisé en ce que ladite combinaison déterminée de caractéristiques sélectionnée afin d'identifier lesdites périodes de durée relativement courte est la suivante :
- présence d'une porteuse vidéo,
- présence d'une porteuse audio,
- présence de synchronisation vidéo,
- absence de modulation vidéo,
- absence de modulation audio,
- absence de signaux d'essai durant la trame de retour.

11. Circuit pour la réception de signaux de télévision, selon la revendication 3, caractérisé en ce que ladite combinaison déterminée de caractéristiques sélectionnée afin d'identifier lesdites périodes de durée relativement courte est la suivante :
- présence d'une porteuse vidéo,
- présence d'une porteuse audio,
- présence de synchronisation vidéo,
- absence de modulation vidéo,
- absence de modulation audio,
- absence de signaux 〈〈 télétexte 〉〉.

12. Circuit pour la réception de signaux de télévision, selon la revendication 3, caractérisé en ce que ladite combinaison déterminée de caractéristiques sélectionnée afin d'identifier lesdites périodes de durée relativement courte est la suivante :
- présence d'une porteuse vidéo,
- présence d'une porteuse audio,
- présence de synchronisation vidéo,
- absence de modulation vidéo,
- absence de modulation audio,
- absence de signaux, normalement présents, lors des lignes 8 à 22.

13. Circuit pour la réception de signaux de télévision, selon la revendication 3, caractérisé en ce que lesdits moyens (20) sont fournis afin d'enregistrer un certain nombre de durées desdites périodes de courte durée, et ainsi adopter comme valeurs sélectionnées pour l'identification celles étant statistiquement significatives parmi celles vérifiées.

14. Circuit pour la réception de signaux de télévision, selon la revendication 6, caractérisé en ce que lesdits moyens (20) sont fournis afin d'enregistrer un certain nombre de durées desdites périodes d'une plus longue durée, et ainsi adopter comme valeurs sélectionnées pour leur identification, que ce soit pour le premier ou le deuxième type de périodes, celles étant statistiquement significatives parmi celles vérifiées.

15. Circuit pour la réception de signaux de télévision, selon l'une ou plusieurs des revendications précédentes, caractérisé en ce qu'il est un composant d'une télévision.

16. Circuit pour la réception de signaux de télévision, selon l'une ou plusieurs des revendications précédentes, caractérisé en ce qu'il est un composant d'un magnétoscope.

17. Circuit pour la réception de signaux de télévision, selon la revendication 3, caractérisé en ce que la durée sélectionnée pour l'identification desdites périodes de courte durée est réglable.

18. Circuit pour la réception de signaux de télévision, selon la revendication 6, caractérisé en ce que la durée sélectionnée pour l'identification desdites périodes du premier et du deuxième types est réglable.

19. Circuit pour la réception de signaux de télévision, selon la revendication 6, caractérisé en ce que des moyens sont fournis afin de mémoriser, canal par canal, des combinaisons différentes de caractéristiques, et/ou des durées desdites périodes de courte durée et desdites périodes du premier et du deuxième types, afin d'optimiser la probabilité de réaliser une bonne identification.

20. Circuit pour la réception de signaux de télévision, selon l'une ou plusieurs des revendications précédentes, caractérisé en ce que l'utilisation de deux platines d'enregistrement est fournie, activées en alternance, afin d'avoir la certitude de ne perdre aucune partie d'enregistrement pour une quelconque raison imprévue qui déphase le système de reconnaissance de la page.

21. Circuit pour la réception de signaux de télévision, selon la revendication 8, caractérisé en ce que lesdits moyens (20) assurent la mémorisation de la position de la bande de l'enregistrement par rapport à chaque période de courte durée et, lorsqu'ils détectent une période du premier type, au moment où cette dernière se termine, un signal (8) indicateur du rembobinage de la bande jusqu'à la dernière position mémorisée est envoyé.

22. Circuit pour la réception de signaux de télévision, selon la revendication 19, caractérisé en ce que lesdits moyens destinés à mémoriser des combinaisons et/ou des durées différentes , canal par canal, sont couplés à des moyens déjà fournis dans le récepteur destiné à mémoriser, canal par canal, des données de fréquence et/ou d'autres données relatives aux niveaux de contrôle.
